(19) Europäisches Patentamt
European Patent Office
Office européen des brevets

(11) **EP 0 421 773 B1**

(12) **EUROPEAN PATENT SPECIFICATION**

(45) Date of publication and mention
of the grant of the patent:
**19.03.1997 Bulletin 1997/12**

(51) Int Cl.6: **H04N 1/40**, H04N 1/00,
H04N 1/393

(21) Application number: **90310847.0**

(22) Date of filing: **04.10.1990**

(54) **Image processing system**

Bildverarbeitungssystem

Système de traitement d'images

(84) Designated Contracting States:
**DE FR GB IT NL**

(30) Priority: **04.10.1989 JP 260709/89**
**03.10.1990 JP 266861/90**
**03.10.1990 JP 266862/90**
**03.10.1990 JP 266863/90**
**03.10.1990 JP 266864/90**

(43) Date of publication of application:
**10.04.1991 Bulletin 1991/15**

(73) Proprietor: **CANON KABUSHIKI KAISHA**
**Tokyo (JP)**

(72) Inventors:
• **Wataya, Masafumi**
**Shimomaruko, Ohta-ku, Tokyo (JP)**
• **Yanaka, Toshiyuki**
**Shimomaruko, Ohta-ku, Tokyo (JP)**
• **Kaneko, Yushi**
**Shimomaruko, Ohta-ku, Tokyo (JP)**

• **Suzuki, Yasutomo**
**Shimomaruko, Ohta-ku, Tokyo (JP)**

(74) Representative:
**Beresford, Keith Denis Lewis et al**
**BERESFORD & Co.**
**2-5 Warwick Court**
**High Holborn**
**London WC1R 5DJ (GB)**

(56) References cited:
EP-A- 0 148 164          EP-A- 0 294 622
FR-A- 2 543 771          US-A- 4 651 223

• **PATENT ABSTRACTS OF JAPAN vol. 11, no. 113 (E-497)9 April 1987 & JP-A-61 262 383**
• **PATENT ABSTRACTS OF JAPAN vol. 13, no. 2 (E-700)6 January 1989 & JP-A-63 212 281**
• **PATENT ABSTRACTS OF JAPAN vol. 13, no. 67 (M-798)15 February 1989 & JP-A-63 268 651**
• **PATENT ABSTRACTS OF JAPAN vol. 13, no. 143 (M-811)7 April 1989 & JP-A-63 307 955**

## Description

The present invention relates to an image processing system, and more particularly to an image processing system for processing video signal.

Video printing is already known for printing a television image. Particularly the video printing from the conventional television system with 525 scanning lines is utilized as very useful means for printing decisive moments in news or sports programs.

In recent sports events or the like, video records are often only available records, so that the role of video printing has become more and more important. Particularly the image of the high definition television will significantly improve the image quality of video printing, and will evidently expand the application of the video printing. For example, the high definition television has a resolving power of 1920 x 1035 points and can provide a high-quality image on the print up to A4 size.

However, in case of handling the image signal of the conventional high definition television in the form of digital signal, the vertical-to-horizontal ratio of each pixel is not 1 : 1 (square) but each pixel has a somewhat oblong rectangular shape, for example in the proposed standard of the Broadcasting Technology Development Association (BTA S-001 1125/60 High-Definition Television Studio System Standard). Consequently, if such data, in which the vertical-to-horizontal ratio of each pixel is not 1 : 1 are supplied to a printing apparatus or the like designed to process data with square pixels, there will be obtained a distorted image as the aspect ratio of the printed image is different from that of the original image.

Also similar image distortion will be encountered when video signal of 1 : 1 aspect ratio, generated in an image reading unit such as a scanner, is supplied to a BTA-standard equipment such as a digital video cassette recorder.

Furthermore, the sampling frequency of 74.25 MHz employed in the high definition signal is primarily designed for use in the broadcasting studio. Since the amount of image data becomes enormous at such sampling frequency, the frequency is generally reduced, in the usual professional and amateur appliances, to a level that can maintain the tolerable image quality. For example, a sampling frequency of 48.6 MHz is employed in so-called MUSE system. However each pixel is not square even at such sampling frequency, so that the printing is associated with the above-explained difficulty.

Japanese Patent Abstract JP-A-61/262383 discloses the use of a standard TV signal as the source for conversion into a video signal for printing.

Japanese Patent Application JP-A-63/212281 discloses the printing of a reversed image of a television picture, stored in a frame memory. The reversal is obtained using a first-in, first-out (FIFO) memory convertible into a last-in, first-out (LIFO) memory.

European Patent Application EP-A-0294622 discloses a facsimile machine for reproducing A3-sized pages as pairs of A4-sized pages. Pixel aspect ratio conversion is achieved by manipulating the addressing of page memory locations whilst reading from that memory for image output.

An object of the present invention is to provide an image processing system not associated with the drawbacks mentioned above, for example to provide an image processing system having a simple structure yet capable of providing a satisfactory image even if the aspect ratios of the printer and the image input apparatus are mutually different.

The invention provides an image processing apparatus for printing image data received in a standard television image signal format using an image printer, the apparatus comprising:

storage means for storing and releasing pixel data of a television image in accordance with a pixel aspect ratio of said standard format; and
transfer means for transferring the released pixel data from the storage means to the printer,

characterised in that:

said standard format has a pixel aspect ratio different to a nominal pixel aspect ratio of the printer; and in that
said transfer means includes means for changing a relationship between the image size printed by the printer and said pixel data released from said storage means in accordance with the aspect ratio of the standard format, synchronously with said transfer, thereby achieving a printed image faithful to the television image in aspect ratio.

The invention further provides an image processing apparatus for converting scanned image data into a standard television image signal format, said standard format having a pixel aspect ratio different to a nominal pixel aspect ratio of a scanner used to obtain the scanned image data, the apparatus comprising:

storage means for storing, in accordance with the pixel aspect ratio of said standard television image signal format, pixel data of a scanned image; and
transfer means for transferring the scanned image data from the scanner to the storage means,
wherein said transfer means includes means for changing a relationship between the image size of the original scanned by the scanner and pixel data supplied to the frame storage means, so as to supply to the frame storage means image data in accordance with the aspect ratio of the standard television image signal format, synchronously with said transfer, thereby achieving said aspect ratio conversion.

Particular embodiments disclosed herein provide image processing systems capable of varying the aspect ratio of the image of the printer or the image scanner without the use of a particular device for converting the amount of data, and/or apparatuses capable of satisfactorily printing image signal matching the standard of high definition television.

Still other aspects of the present invention, and the features thereof, will become fully apparent from the following description of the embodiments, which is to be taken in conjunction with the attached drawings.

Fig. 1 is a block diagram of a first embodiment of the present invention;

Fig. 2 is a block diagram of an aspect ratio converter 14 shown in Fig. 1;

Fig. 3 is a timing chart showing the function of the circuit shown in Fig. 2;

Fig. 4 is a block diagram showing another embodiment of the circuit shown in Fig. 2;

Fig. 5 is a view showing an example of the structure of a printer 18;

Fig. 6 is a block diagram of a modified embodiment of the present invention;

Fig. 7 is a block diagram of a variation of the circuit shown in Fig. 2;

Figs. 8 and 9 are timing charts showing the function of the circuit shown in Fig. 7;

Fig. 10 is a block diagram of a further embodiment of the present invention;

Fig. 11 is a view showing a printer of a structure different from that shown in Fig. 5;

Figs. 12 and 13 are block diagrams showing examples of the structure of a printing speed changing circuit shown in Fig. 11; and

Fig. 14 is a view showing the details of a scanner shown in Fig. 10.

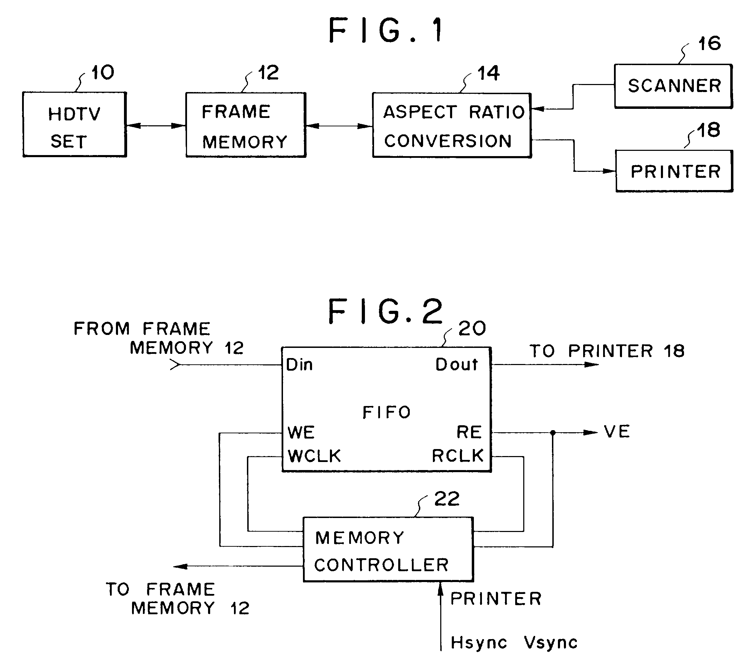

Fig. 1 is a block diagram of an image processing system embodying the present invention. In Fig. 1 there are shown a high definition video equipment (hereinafter written as HD equipment) 10 for entering or releasing video signal, such as a high definition television camera, a high definition video cassette recorder or a high definition television receiver; a frame memory 12 for storing the video signal from the HD equipment or from a data amount converter; a data amount converter (aspect ratio converter) 14 for converting the amount of data of the video signal from the frame memory 12 or a scanner 16, for supply to the frame memory 12 or a printer 18; a scanner 16 and a printer 18 which are usually connected by a signal cable to constitute a copying apparatus by the mutual combination.

In the present embodiment, the HD equipment 10 releases image signal of a frequency of so-called BTA standard (ca. 74.25 MHz), and the printer 18 prints the image signal with a speed corresponding to 71.28 MHz.

In the following there will be explained two examples of the structure of the data amount converter 14.

When the high definition television signal is sampled with a frequency of 74.25 MHz defined in the BTA standard, each pixel is vertically oblong and each line contains 1920 pixels. On the other hand, the printer 18 forms square pixels with a vertical-to-horizontal ratio of 1 : 1, so that a line requires 1840 pixels in order to realize the aspect ratio 16 : 9 of the high definition television. Consequently, in order to print the video image sampled with 74.25 MHz, the data amount per scanning line has to be reduced from 1920 pixels to 1840 pixels.

For this purpose, either of following two methods is employed in the present embodiment.

(1) Simple skipping method:

As explained above, the sampling frequency of the BTA standard and the frequency of the printer are different by about 3 MHz. Consequently the aspect ratio of the entire image can be retained by skipping 3 pixels per every 74 pixels.

(2) Calculation method:

Instead of simple skipping of 3 pixels per every 74 pixels mentioned above, an interpolating calculation can be employed to convert 74 pixels into 71 pixels, thereby obtaining a smooth image.

Now reference is made to Fig. 2 showing an example of the structure of the data amount converter 14 employing the simple skipping methods explained above.

A FIFO (first-in-first-out) memory 20 is provided for storing the data from the frame memory 12 and sending the data to the printer 18. Said FIFO memory is an asynchronous memory for converting the data amount in each line, and can have a structure of 2048 x 8 bits, since there are 1920 x 1035 effective pixels in the BTA standard. A memory controller 22 receives a horizontal synchronization signal Hsync and a vertical synchronization signal Vsync from the printer 18, and generates, in synchronization with said Hsync signal, a read instruction signal RM to the frame memory, a write enable signal WE and a read enable signal RE to the FIFO memory 20, and a video enable signal VE indicating the effective image period to the printer.

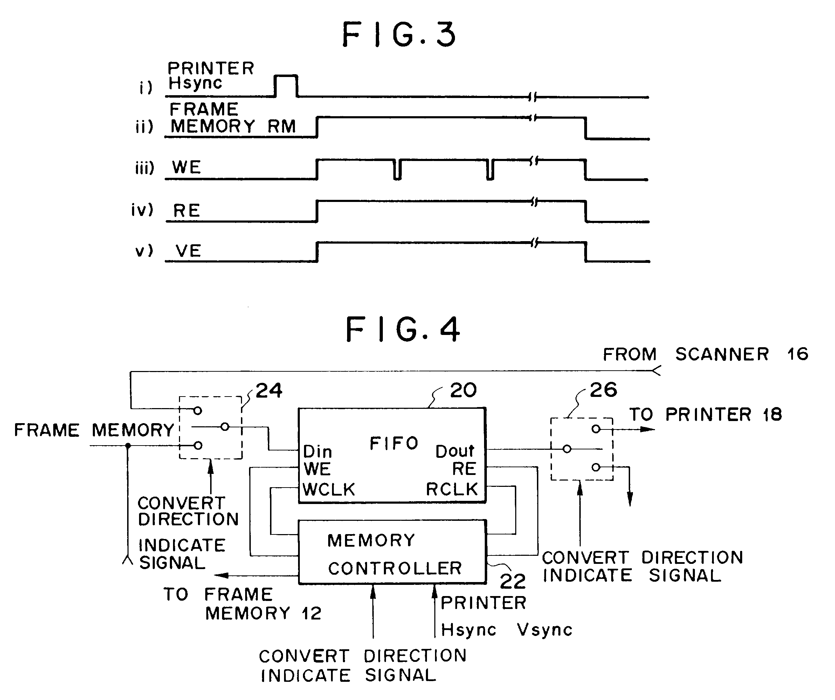

In the following there will be explained the function of the data amount converter 14, with reference to a timing chart shown in Fig. 3, illustrating the Hsync signal (i) of the printer, the read instruction signal (ii) for the frame memory 12, the write and read enable signals (iii), (iv) for the FIFO memory 20, and the video enable signal VE (v) to the printer 18. The memory controller 22 shown in Fig. 3 sends write clock signal WCLK of 74.25 MHz and read clock signal RCLK of 71.28 MHz to the FIFO memory 20. Thus the FIFO memory 20 shown in Fig. 2 executes compensation between the speed of the frame memory 12 according to the BTA standard, and 71.28 MHz of the printer 18.

Also in the present embodiment, the WE signal is maintained at the low level state for periods of 3 pixels in a period of 74 pixels as shown by (iii) in Fig. 3, thereby realizing the simple skipping explained in (1) above.

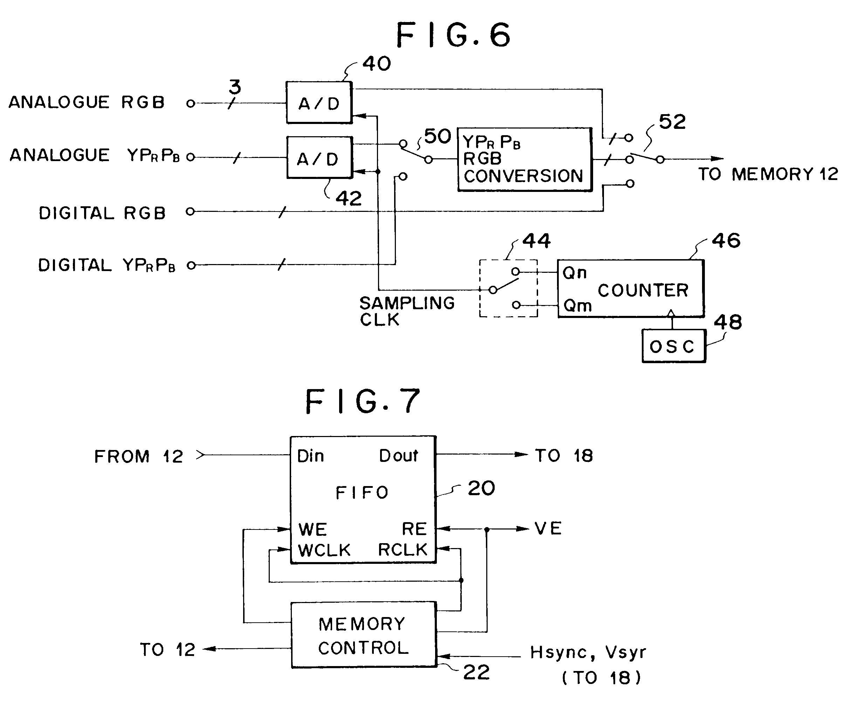

It is also possible to use common clock pulses as the RCLK and WCLK signals as shown in Fig. 7, to read the image data from the frame memory 22 simultaneous with the entry of the horizontal synchronization signal Hsync from the printer 18 and to realize the pixel skipping by controlling the write enable signal for the memory 20. In this case, after the blanking period of the printer 18, the write enable signal RE is rendered effective to supply the pixel data, subjected to data amount conversion, from the memory 20 to the printer 18.

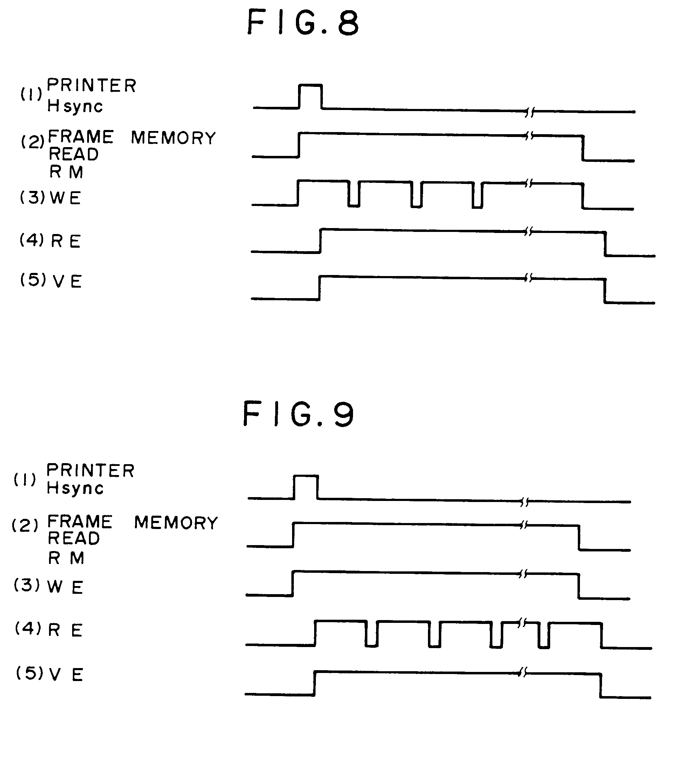

Fig. 9 is a timing chart of the memory 20 and the memory controller 22 in case of printing the video data sampled at 48.6 MHz. In this case each pixel becomes horizontally oblong, and a line contains 1257 pixels. It is therefore necessary, at the supply to the printer 18, to interpolate a pixel in every about 2.16 pixels. Such interpolation can be realized by controlling the data reading from the memory 20. However, since interpolation of a pixel is only possible per an integral number of pixels, there are combined, in the present embodiment, interpolation of a pixel per two pixels and that of a pixel per three pixels to achieve interpolation of a pixel per every 2.16 pixels in average.

In the embodiment shown in Fig. 2, the conversion of aspect ratio is conducted at the transfer of the video signal from the frame memory 12 to the printer 18. Another embodiment shown in Fig. 4 is capable of an additional conversion of the aspect ratio at the storage of the image signal, obtained in the scanner 16, in the frame memory 12.

In the embodiment shown in Fig. 4, there are additionally provided switches 24, 26 for switching the input and output of the FIFO memory 20. A switch instruction signal, for controlling said switches 24, 26, is also supplied to the memory controller 22. In response to said switch instruction signal, the memory controller 22 controls the signals WE, RE, WCLK, RCLK supplied to the FIFO memory 20 in such a manner as to effect an operation opposite to the pixel skipping explained above.

As explained in the foregoing, the present embodiment is capable of arbitrary conversion of the aspect ratio by using a FIFO memory and controlling the timing and frequency of data writing into and reading from said FIFO memory.

Also in the present embodiment, since the data amount converter 14 is provided behind the frame memory for storing the video signal obtained from the HD equipment, said data amount converter 14 can be operated with a relatively low speed, in comparison with the case in which the data amount converter is provided between the HD equipment and the frame memory, so that the circuit can be operated with improved precision.

In the following there will be explained the structure of the printer 18 of the present embodiment.

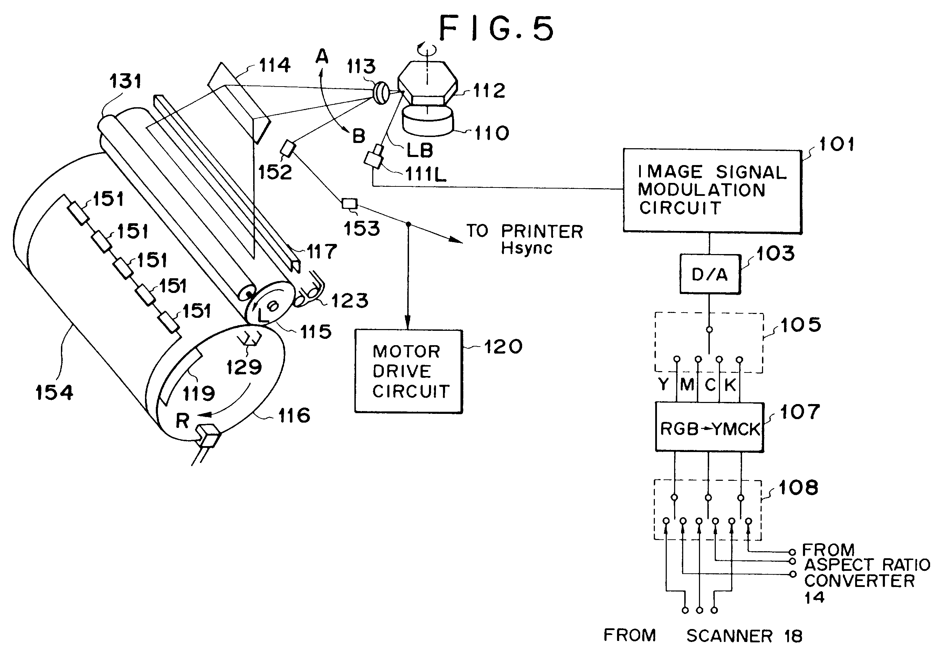

In Fig. 5, there are shown a switch circuit 107 for selecting either the image signal from the data amount converter 14 or the image signal from the scanner 16; a converter circuit 107 for converting the input signals R, G, B into signals Y, M, C and K; a selector switch 105 for selecting one of the Y, M, C and K signals from the converter circuit 107 for supply to a D/A converter 103; and an image signal modulating circuit 101 for applying pulse width modulation to the output signal of the D/A converter 103.

The printer of the present embodiment is composed of a laser beam printer for color printing with frame sequential method. A laser beam LB modulated by the modulation circuit 101 corresponding to the image data is put into a high-speed horizontal scanning motion, as indicated by an arrow A-B, by a polygon mirror 112 rotated at a high speed by a motor 110, and is focused on the surface of a photosensitive drum 115 through an f-θ lens 113 and a mirror 114, thereby giving dot exposures corresponding to the image data. A horizontal scanning motion of the laser beam corresponds to a horizontal scan of the original image, and to a width of 1/16 mm in the sub scanning direction in the present embodiment.

As the photosensitive drum 115 is rotated at a constant speed in a direction L, the laser beam scans said drum in the main scanning direction by the above-explained scanning motion of the beam and in the sub scanning direction by the rotation of said drum, thereby exposing the drum in succession and forming a two-dimensional latent image. Said exposure is preceded by uniform charging with a charger 117 and succeeded by image developed with a developing sleeve 131 to obtain a visible toner image. For example, corresponding to the first scanning operation of a color image reader, the image development is conducted with yellow toner of a developing sleeve 131Y to obtain, on the photosensitive drum 115, a toner image corresponding to the yellow component of the video signal entered through the switch 108.

Then said yellow toner image is transferred onto a sheet 154, wound on a transfer drum 116 and gripped at the front end by a gripper 151, by means of a transfer charger 129 provided at the nip between the photosensitive drum 115 and the transfer drum 116. The above-explained process is repeated for the images of magenta (M), cyan (C) and black (K), and the toner images are superposed on said sheet 154 to complete a full-color image with toners of four colors.

Subsequently the transfer sheet 154 is separated from the transfer drum 116 by an unrepresented movable separating finger, and guided by a conveyor belt 142 to an image fixing unit, in which the toner image on the sheet 154 is fixed by fusion with heated pressure rollers in said unit.

In Fig. 5 there are also shown a photosensor 152 for detecting the timing of scanning of the laser beam LB, and a signal processing circuit 153 for shaping the output signal of said photosensor 152. During the operation of the printer, the output signal of said processing circuit 153 is released as the Hsync signal. A motor drive circuit 120 drives the motor 110, based on the output of said processing circuit 153.

In the above-explained embodiment, the conversion of aspect ratio is achieved by a data amount converter, but there may also be employed other methods for this purpose.

For example the present invention also includes a method of storing the digital image signal once in a frame memory, and, at the supply of said signal to the printer, varying the printing speed of said printer in such a manner as to obtain proper aspect ratio (1 : 1 in the present embodiment).

Such variation in the printing speed can be achieved in various manner, according to the kind of the printer. In case of a laser beam printer, the aforementioned drive circuit 120 may be so controlled as to increase the rotating speed of the polygon mirror reflecting the laser beam. In case of a thermal printer, the sheet feeding speed may be decreased.

The conversion of the aspect ratio may be varied by suitably changing, at the conversion of data amount of the image signal, the reading speed of the scanner.

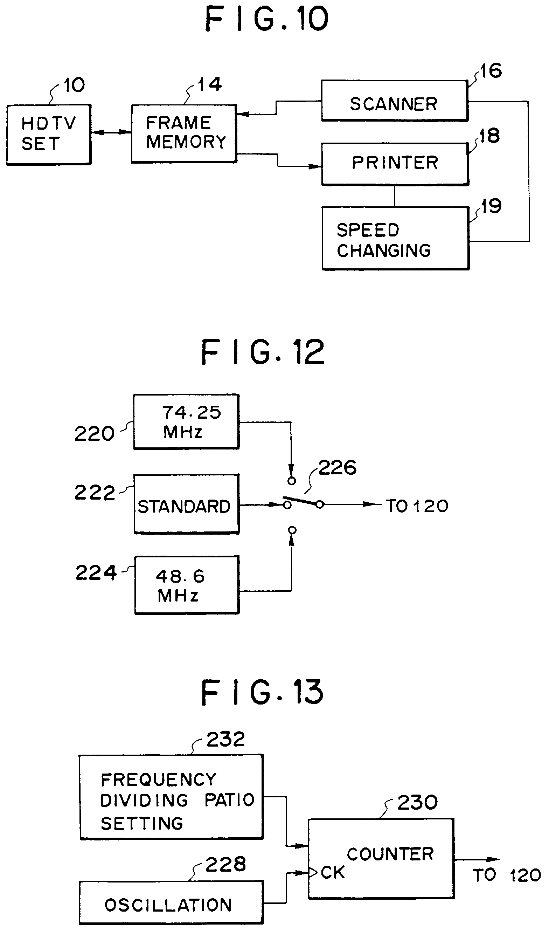

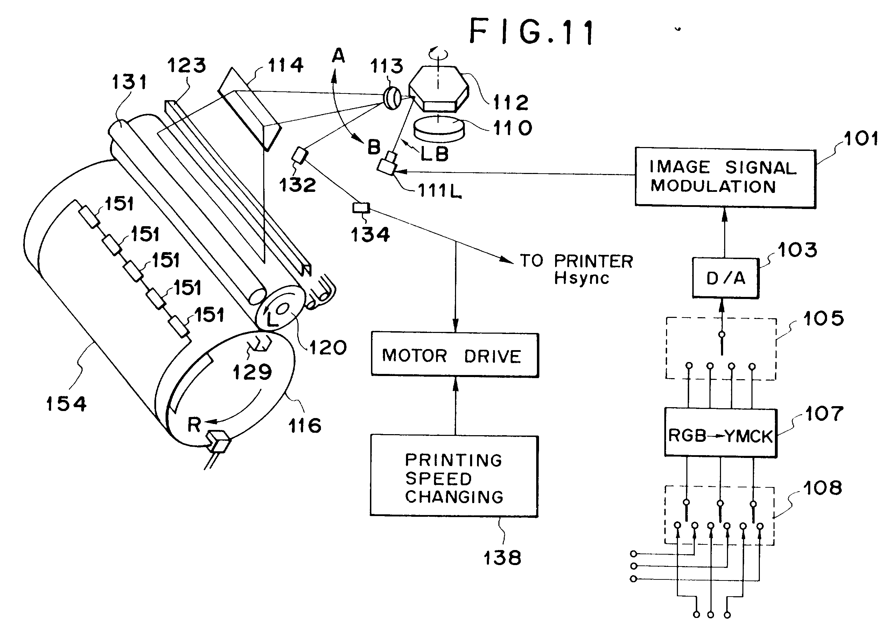

Fig. 10 shows an embodiment employing such method, wherein same components as those in Fig. 1 are represented by same numbers and will not be explained further.

In Fig. 10 there are provided a scanner 16' with variable reading speed and a printer 18' with variable printing speed.

Fig. 11 shows the structure of the printer 18' shown in Fig. 10. Said printer is provided with a printing speed changing block, in addition to the components shown in Fig. 5.

The motor drive circuit 120 in Fig. 11 rotates the motor 110 with a revolution corresponding to the frequency of a timing signal from a printing speed changing circuit 138. Thus said circuit 138 controls the revolution of the motor 110 by the frequency of the timing signal supplied from said circuit 138 to the motor drive circuit 120, thereby controlling the revolution of the polygon mirror 112.

Fig. 12 shows an example of the circuit structure of the printing speed changing circuit 138, wherein provided are oscillators 220, 222, 224 of respectively different oscillation frequencies, and a switch 226 for selecting one of output clock signals of said oscillators 220, 222, 224 for supply to the motor drive circuit 120. For example the oscillator 222 oscillates with a standard frequency; the oscillator 220 oscillates with a higher frequency 72.45 MHz for correcting vertically oblong pixel shape; and the oscillator 224 oscillates with a lower frequency 48.6 MHz for correcting the horizontally oblong pixel shape. One of the outputs of the oscillators 220, 222, 224 is selected according to the sampling rate of the image signal to be printed. In this manner the printer 18' can be operated with a printing speed corresponding to said sampling rate, thereby obtaining the printed image of an aspect ratio same as that of the original image.

Fig. 13 shows another example of the printing speed changing circuit 138, wherein provided are a crystal oscillator 228 of a constant frequency, a programmable counter 230, and a frequency division ratio setting circuit 232 for determining the frequency dividing ratio in the programmable counter 230. Said circuit 232 releases a frequency dividing ratio signal, according to the sampling rate of the image to be printed, for obtaining a revolution of the polygon mirror 112 providing the proper aspect ratio in the printed image. The counter 230 divides the frequency of the clock signal from the oscillator 228 with the ratio instructed by the ratio setting circuit 232 and sends the frequency divided clock signal to the motor drive circuit 120. The frequency division ratio setting circuit 232 may be so designed as to selectively release one of frequency dividing data corresponding to a standard sampling frequency, a higher sampling frequency 74.25 MHz and a lower sampling frequency 48.6 MHz, or to release arbitrarily variable frequency dividing data.

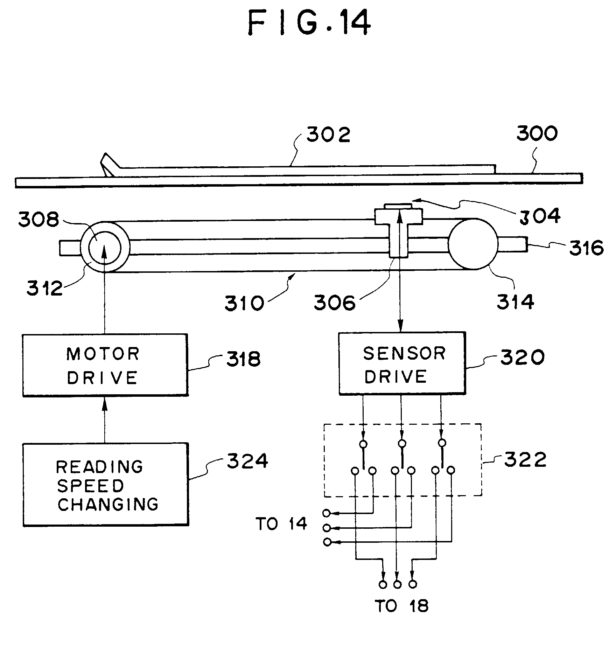

Fig. 14 is a schematic view of the internal structure of the scanner 16, wherein shown are a platen glass 300 for supporting the original image; an original 302 to be read; a color line sensor 304 for reading said original 302; a carriage 306 supporting said line sensor 304; a motor 308 for moving the carriage 306 by means of a wire 310; pulleys 312, 314 for guiding said wire 210; a guide rail 316 for the carriage 306; a motor drive circuit 318 for driving said motor 308; a line sensor drive circuit 320 for driving said line sensor 304 and releasing three primary color signals of red, green and blue obtained from the output of said line sensor 304; a switch 322 for selecting the printer 18 or the frame memory 12 as the destination of the data; and a reading speed changing circuit 324, included in the speed changing circuit 19, for supplying the motor drive circuit 318 with a timing signal. Said reading speed changing circuit 324 is basically similar to that shown in Figs. 12 and 13.

The motor drive circuit 318 rotates the motor 308 with a revolution corresponding to the frequency of the signal from the reading speed changing circuit 324, whereby the drive circuit 320 can provide image signal of an aspect ratio matching that of the image of the frame memory 14 or the printer 18.

In the above-explained embodiment, the printing speed is changed by controlling the rotating speed of the polygon mirror 114, but it is also possible to maintain the polygon mirror 114 at a constant revolution and to vary the revolution of the drums 120 and 124.

Also the foregoing description has been limited to an electrophotographic printer employing the polygon mirror 114, but the present invention is likewise applicable to other printers such as a thermal printer or an ink jet printer. In such case the moving speed of the recording head is controlled because the recording density of the head is physically fixed.

In the foregoing embodiments shown in Figs. 1 and 5, the conversion of aspect ratio is conducted on the digital input image signal. However, the conversion of aspect ratio may likewise be achieved by changing the timing of sampling for A/D conversion if the high definition video signal is entered in analog form.

A modified circuit having this facility is shown in Fig. 6.

In Fig. 6, there are provided A/D converters 40, 42 for converting input analog signals R, G, B and $YP_RP_B$ into digital signals, according to A/D conversion timing pulses entered through a switch 44; a counter 46 for dividing the frequency of the output signal from an oscillator 48 with such dividing ratios as to generate a sampling frequency corresponding to the BTA standard from a terminal Qn and a frequency matching the printer from a terminal Qm; a selector switch 50 for selecting the Y, $P_R$, $P_B$ signals entered from two sources; and a selector switch 52 for selecting the R, G, B signals entered from two sources.

In the circuit shown in Fig. 6, the switch 44 is placed at Qm for printing the input video signal in the printer 18, or at Qn otherwise.

The above-explained control allows to satisfactorily respond to two signal processing systems of different aspect ratios.

In the foregoing embodiments, the data amount conversion is achieved by pixel skipping or interpolation, but a similar effect can also be obtained by calculation. There will be considered a case in which the sampling frequency $f_Q$ before data amount conversion and the sampling frequency $f_P$ after conversion are related as follows:

$$f_Q : f_P = 3 : 4$$

According to Shannon's sampling principle, the original signal can be restored from the sampled data as follows:

$$g(t) = \Sigma g(iT)S(t - iT)$$

wherein i is zero or a positive integer, T is $1/f_Q$, and S is the sampling frequency.

Conversion of sample values $Q_0$, $Q_1$, $Q_2$,... obtained at the sampling frequency $f_Q$ into sample values $P_0$, $P_1$, $P_2$,... with the sampling frequency $f_P$ can be achieved by substituting g(t), obtained by substituting g(0), g(1), g(2),... with $Q_0$, $Q_1$, $Q_2$,... in the right-hand term of the foregoing equation, with the times t of $P_0$, $P_1$, $P_2$,... Stated differently, this conversion is to interpolate $P_i$ with the minimum common multiple $4f_Q$ (= $3f_P$) of $f_Q$ and $f_P$, and to effect re-sampling with the frequency $f_P$ to obtain $Q_j$. More specifically;

$$P_{4k} = \Sigma_m S_{4m} \cdot Q_{3k+m}$$

$$P_{4k+1} = \Sigma_m S_{4m-3} \cdot Q_{3k+m}$$

$$P_{4k+2} = \Sigma_m S_{4m-6} \cdot Q_{3k+m}$$

$$P_{4k+3} = \Sigma_m S_{4m-9} \cdot Q_{3k+m}$$

wherein $\Sigma_m$ is the summation from $-\infty$ to $+\infty$. Though such summation is not realizable in practice, it can be approximated utilizing a random access memory or a digital signal processing IC.

In the foregoing description, the nature of the video signal is not specified. In fact said video signal may be three primary color signals of red, green and blue, a luminance signal and color difference signals, or a composite signal. In the foregoing embodiments, the image after data amount conversion contains several discontinuous portions, but such discontinuity can be eliminated by applying a smoothing filtration afterwards. Also the interpolation is not limited to simple interpolation but can be linear interpolation or cubic interpolation.

As will be easily understood from the foregoing description, the present invention enables to read or print the images of different sampling rates while maintaining the original aspect ratio of the image.

The foregoing embodiments have been limited to the signal processing between an HD equipment and a scanner/printer, but the present invention is applicable not only to the high definition television signal but also to other various video signals.

As explained in the foregoing, the embodiments of the present invention allows to prevent image distortion, resulting from a change in the aspect ratio due to signal processing.

## Claims

1. An image processing apparatus for printing image data received in a standard television image signal format using an image printer (18), the apparatus comprising:

   storage means (12) for storing and releasing pixel data of a television image in accordance with a pixel aspect ratio of said standard format; and
   transfer means for transferring the released pixel data from the storage means to the printer (18),

   characterised in that:

said standard format has a pixel aspect ratio different to a nominal pixel aspect ratio of the printer; and in that

said transfer means includes means (14) for changing the aspect ratio of pixels printed by the printer, relative to that of the pixel data released from said storage means in accordance with the aspect ratio of the standard format, said change being synchronous with said transfer, thereby achieving a printed image faithful to the television image in aspect ratio.

2. An apparatus according to claim 1, wherein said transfer means includes a first in first out (FIFO) memory (20) and is arranged so as to omit to store selected pixel data in said FIFO memory (20), or to read out the same pixel data from said FIFO memory (20) more than once, so as to effect said change of relative aspect ratio.

3. An apparatus according to claim 1, wherein said transfer means includes means (19) for controlling a mechanical scanning speed of the printer (18) in a main-scan direction, in order to change said relative aspect ratio.

4. An apparatus according to claim 3, wherein said printer (18) is a laser printer and said transfer means includes means for controlling a polygon mirror (112) rotation speed of the laser printer.

5. An apparatus according to claim 3, wherein said printer includes a moving recording head and said transfer means includes means for controlling a moving speed of the recording head.

6. An apparatus according to claim 1, wherein said transfer means includes means for controlling a mechanical scanning speed of the printer in a sub-scan direction, in order to change said relative aspect ratio.

7. An apparatus according to claim 6, wherein said transfer means includes means for controlling the rotation speed of an electrophotographic drum (120) of said printer.

8. An apparatus according to claim 6, wherein said transfer means includes means for controlling a speed of feeding a sheet of recording medium.

9. An apparatus according to any preceding claim, wherein the standard television image signal format is a broadcasting standard format.

10. An apparatus according to claim 9, wherein the broadcast standard format is a high definition television signal format.

11. An apparatus according to claim 10, wherein said high definition television signal format is in accordance with BTA S-001 1125/60 High-Definition Television System Studio Standard.

12. An apparatus according to any preceding claim, wherein the standard television image signal format has non-unity pixel aspect ratio and the nominal pixel aspect ratio of the printer is unity.

13. An image processing apparatus for converting scanned image data into a standard television image signal format, said standard format having a pixel aspect ratio different to a nominal pixel aspect ratio of a scanner used to obtain the scanned image data, the apparatus comprising:

storage means (12) for storing, in accordance with the pixel aspect ratio of said standard television image signal format, pixel data of a scanned image; and
transfer means for transferring the scanned image data from the scanner (16) to the storage means,
wherein said transfer means includes means (14) for changing the aspect ratio of pixels scanned by the scanner relative to the aspect ratio of pixel data supplied to the frame storage means, so as to supply to the frame storage means image data in accordance with the aspect ratio of the standard television image signal format, synchronously with said transfer.

14. An apparatus according to claim 13, wherein said transfer means (14) includes a first in first out (FIFO) memory (20) and is arranged so as to omit to store selected scanned pixel data in said FIFO memory (20) or to read out the same pixel data from said FIFO memory (20) more than once so as to effect said change of relative aspect ratio.

15. An apparatus according to claim 13, wherein said transfer means includes means (324) for controlling a mechanical reading speed of the scanner.

16. An apparatus according to claim 15, wherein the transfer means controls the speed of a colour line sensor (304) in a sub-scan direction of the scanner.

17. An apparatus according to any of claims 13 to 16, wherein the standard television image signal format is a broadcasting standard format.

18. An apparatus according to claim 17, wherein the broadcast standard format is a high definition television signal format.

19. An apparatus according to claim 18, wherein said high definition television signal format is in accordance with BTA S-001 1125/60 High-Definition Television System Studio Standard.

20. An apparatus according to any of claims 13 to 19, wherein the standard television image signal format has non-unity pixel aspect ratio and the nominal pixel aspect ratio of the scanner is unity.

**Patentansprüche**

1. Bildverarbeitungsgerät zum Drucken von in einem Format des Fernsehnorm- Bildsignals empfangenen Bilddaten, unter Verwendung eines Bilddrukkers (18), mit:

    Speichermitteln (12) zur Speicherung und zur Freigabe von Pixeldaten eines Fernsehbildes gemäß einem Pixelbildseitenverhältnis des Normformates;
Übertragungsmitteln zur Übertragung der freigegebenen Pixeldaten aus den Speichermitteln an den Drucker (18),

    **dadurch gekennzeichnet,** daß

    das Normformat ein sich vom nominalen Pixelbildseitenverhältnis des Druckers unterscheidendes Pixelbildseitenverhältnis hat und daß das Übertragungsmittel über Mittel (14) verfügt, die das Bildseitenverhältnis von vom Drucker gedruckten Pixeln abhängig von von den Speichermitteln freigegebenen Pixeldaten gemäß dem Bildseitenverhältnis des Normformates ändern, wobei die Änderung synchron mit der Übertragung erfolgt, wodurch ein dem Fernsehbild im Bildseitenverhältnis getreues gedrucktes Bild erzielt wird.

2. Gerät nach Anspruch 1, dessen Übertragungsmittel einen Eingangsfolgebearbeitungsspeicher (FIFO-Speicher) (20) enthält, der eingerichtet ist, ausgewählte Pixeldaten beim Speichern in den FIFO-Speicher (20) auszulassen oder dieselben Pixeldaten aus dem FIFO- Speicher (20) mehr als einmal auszulesen, um so die Änderung des relativen Bildseitenverhältnisses zu bewirken.

3. Gerät nach Anspruch 1, dessen Übertragungsmittel über Mittel (19) zur Steuerung einer mechanischen Abtastgeschwindigkeit des Druckers (18) in Hauptabtastrichtung verfügt, um das relative Bildseitenverhältnis zu ändern.

4. Gerät nach Anspruch 3, dessen Drucker (18) ein Laserdrucker ist, und dessen Übertragungsmittel über Mittel zur Steuerung der Umdrehungsgeschwindigkeit eines Polygonspiegels (112) des Laserdruckers verfügt.

5. Gerät nach Anspruch 3, dessen Drucker einen beweglichen Aufnahmekopf enthält und dessen Übertragungsmittel über Mittel zur Steuerung einer Bewegungsgeschwindigkeit des Ausfnahmekopfes verfügt.

6. Gerät nach Anspruch 1, dessen Übertragungsmittel über Mittel zur Steuerung einer mechanischen Abtastgeschwindigkeit des Druckers in Unterabtastrichtung verfügt, um das relative Bildseitenverhältnis zu ändern.

7. Gerät nach Anspruch 6, dessen Übertragungsmittel über Mittel zur Steuerung der Drehgeschwindigkeit einer elektrophotographischen Trommel (120) des Druckers verfügt.

8. Gerät nach Anspruch 6, dessen Übertragungsmittel über Mittel zur Steuerung einer Geschwindigkeit der Blattzuführung des Aufzeichnungsträgers verfügt.

9. Gerät nach einem der vorstehenden Ansprüche, bei dem das Signalformat des Fernsehnormbildes ein Sendenormformat ist.

10. Gerät nach Anspruch 9, bei dem das Sendenormformat ein hochauflösendes Fernsehsignalformat ist.

11. Gerät nach Anspruch 10, dessen hochauflösendes Fernsehsignalformat mit dem BTA S- 001 1125/60 High-Definition Television System Studio Standard übereinstimmt.

12. Gerät nach einem der vorstehenden Ansprüche, dessen Fernsehnorm- Bildsignalformat ein Nichteinheitspixel-Bildseitenformat hat und bei dem das nominelle Pixelbildseitenverhältnis des Druckers einheitlich ist.

13. Bildverarbeitungsgerät zur Umsetzung abgetasteter Bilddaten in ein Fernsehnorm- Bildsignalformat, wobei das Normformat ein sich von dem nominellen Pixelbildseitenformat des zur Erzeugung der Abtastbilddaten benutzten Scanners unterscheidendes Pixelbildseitenverhältnis hat, mit:

    Speichermitteln (12) zur Speicherung von Pixeldaten des abgetasteten Bildes gemäß dem Pixelbildseitenverhältnis des Fernsehnorm-Bildsignalformats; und mit
Übertragungsmitteln zur Übertragung der abgetasteten Bilddaten vom Scanner (16) in die Speichermittel,

wobei das Übertragungsmittel über Mittel (14) zur Änderung des Bildseitenverhältnisses der Pixel verfügt, die von dem Scanner abhängig vom Bildseitenverhältnis von vom Bildspeichermittel gelieferten Pixeldaten abgetastet werden, um an das Bildspeichermittel Bilddaten gemäß dem Bildseitenverhältnis des Fernsehnorm- Bildsignalformats synchron mit der Übertragung zu liefern.

14. Gerät nach Anspruch 13, dessen Übertragungsmittel (14) einen Eingangsfolgebearbeitungsspeicher (FIFO- Speicher) (20) enthält der eingerichtet ist, ausgewählte Abtastpixeldaten beim Speichern in den FIFO-Speichers (20) auszulassen, oder dieselben Pixeldaten aus dem FIFO- Speicher (20) mehr als einmal auszulesen, um so die Änderung des relativen Bildseitenverhältnisses zu bewirken.

15. Gerät nach Anspruch 13, dessen Übertragungsmittel Mittel (324) zur Steuerung einer mechanischen Lesegeschwindigkeit des Scanners enthält.

16. Gerät nach Anspruch 15, dessen Übertragungsmittel die Geschwindigkeit eines Farbzeilensensors (304) in Unterabtastrichtung des Scanners steuert.

17. Gerät nach einem der Ansprüche 13 bis 16, bei dem das Fernsehnorm- Bildsignalformat ein Sendenormformat ist.

18. Gerät nach Anspruch 17, bei dem das Sendenormformat ein hochauflösendes Fernsehsignalformat ist.

19. Gerät nach Anspruch 18, dessen hochauflösendes Fernsehsignalformat mit dem BTA S- 001 1125/60 High-Definition Television System Studio Standard übereinstimmt.

20. Gerät nach einem der Ansprüche 13 bis 19, dessen Fernsehnorm- Bildsignalformat ein Nichteinheitspixel-Bildseitenformat hat und bei dem das nominelle Pixelbildseitenverhältnis des Druckers einheitlich ist.

**Revendications**

1. Appareil de traitement d'image pour l'impression de données d'image dans un format standard de signal d'image de télévision utilisant une imprimante (18) d'image, l'appareil comprenant:

un moyen de stockage (12) pour stocker et libérer des données de pixel d'une image de télévision en fonction du rapport de dimensions de pixel dudit format standard; et

un moyen de transfert pour transférer les données de pixel libérées, entre le moyen de stockage et l'imprimante (18),

caractérisé en ce que:

ledit format standard a un rapport de dimensions de pixel différent du rapport de dimensions de pixel nominal de l'imprimante; et en ce que
ledit moyen de transfert comporte un moyen (14) pour modifier le rapport de dimensions de pixels imprimés par l'imprimante, par rapport à celui des données de pixel libérées par ledit moyen de stockage en fonction du rapport de dimensions du format standard, ladite modification et ledit transfert étant synchrones, afin d'obtenir une image imprimée fidèle à l'image de télévision en ce qui concerne le rapport de dimensions.

2. Appareil selon la revendication 1, dans lequel ledit moyen de transfert comporte une première mémoire (20) premier entré premier sorti (FIFO) et est agencé de manière à omettre de stocker des données de pixel sélectionnées dans ladite mémoire FIFO (20), ou de lire les mêmes données de pixel à partir de ladite mémoire FIFO (20) plus d'une fois, de manière à effectuer ladite modification du rapport de dimensions relatif.

3. Appareil selon la revendication 1, dans lequel ledit moyen de transfert comporte un moyen (19) pour commander la vitesse de balayage mécanique de l'imprimante (18) dans une direction de balayage principal, afin de modifier ledit rapport de dimensions relatif.

4. Appareil selon la revendication 3, dans lequel ladite imprimante (18) est une imprimante laser et ledit moyen de transfert comporte un moyen pour commander la vitesse de rotation d'un miroir polygonal (112) de l'imprimante laser.

5. Appareil selon la revendication 3, dans lequel ladite imprimante comporte une tête d'enregistrement mobile et ledit moyen de transfert comporte un moyen pour commander la vitesse de déplacement de la tête d'enregistrement.

6. Appareil selon la revendication 1, dans lequel ledit moyen de transfert comporte un moyen pour commander la vitesse de balayage mécanique de l'imprimante dans une direction de balayage secondaire, afin de modifier ledit rapport de dimensions relatif.

7. Appareil selon la revendication 6, dans lequel ledit moyen de transfert comporte un moyen pour commander la vitesse de rotation d'un cylindre électrophotographique (120) de ladite imprimante.

8. Appareil selon la revendication 6, dans lequel ledit moyen de transfert comporte un moyen pour commander la vitesse d'avance d'une feuille de support d'enregistrement.

9. Appareil selon l'une quelconque des revendications précédentes, dans lequel le format standard du signal d'image de télévision est un format standard d'émission de programmes.

10. Appareil selon la revendication 9, dans lequel le format standard d'émission de programmes est un format de signal de télévision haute définition.

11. Appareil selon la revendication 10, dans lequel ledit format de signal de télévision haute définition est conforme au Standard de Studio du Système de Télévision Haute Définition BTA S-001 1125/60.

12. Appareil selon l'une quelconque des revendications précédentes, dans lequel le format standard du signal d'image de télévision a un rapport de dimensions de pixel non unitaire et le rapport de dimensions de pixel nominal de l'imprimante est égal à l'unité.

13. Appareil de traitement d'image pour convertir des données d'image balayées en un format standard de signal d'image de télévision, ledit format standard ayant un rapport de dimensions de pixel différent d'un rapport de dimensions de pixel nominal d'un dispositif de balayage utilisé pour obtenir les données d'image balayées, l'appareil comprenant:

   un moyen de stockage (12) pour stocker, en fonction du rapport de dimensions de pixel dudit format standard de signal d'image de télévision, des données de pixel d'une image balayée; et
   un moyen de transfert pour transférer les données d'image balayées, entre le dispositif de balayage (16) et le moyen de stockage,
   dans lequel ledit moyen de transfert comporte un moyen (14) pour modifier le rapport de dimensions des pixels balayés par le dispositif de balayage par rapport au rapport de dimensions des données de pixel appliquées au moyen de stockage d'image, de manière à appliquer, au moyen de stockage d'image, des données d'image en fonction du rapport de dimensions du format standard du signal d'image de télévision, de manière synchrone avec ledit transfert.

14. Appareil selon la revendication 13, dans lequel ledit moyen de transfert (14) comporte une mémoire (20) premier entré premier sorti (FIFO) et est agencé de manière à omettre de stocker des données de pixel balayées sélectionnées dans ladite mémoire FIFO (20) ou de lire les mêmes données de pixel à partir de ladite mémoire FIFO (20), plus d'une fois, de manière à effectuer ladite modification du rapport de dimensions relatif.

15. Appareil selon la revendication 13, dans lequel ledit moyen de transfert comporte un moyen (324) pour commander la vitesse de lecture mécanique du dispositif de balayage.

16. Appareil selon la revendication 15, dans lequel le moyen de transfert commande la vitesse d'un détecteur (304) de ligne en couleurs dans une direction de balayage secondaire du dispositif de balayage.

17. Appareil selon l'une quelconque des revendications 13 à 16, dans lequel le format standard du signal d'image de télévision est un format standard d'émission de programmes.

18. Appareil selon la revendication 17, dans lequel le format standard d'émission de programmes est un format de signal de télévision haute définition.

19. Appareil selon la revendication 18, dans lequel ledit format de signal de télévision haute définition est conforme au Standard de Studio du Système de Télévision Haute Définition BTA S-001 1125/60.

20. Appareil selon l'une quelconque des revendications 13 à 19, dans lequel le format standard du signal d'image de télévision a un rapport de dimensions de pixel non unitaire et le rapport de dimensions de pixel nominal du dispositif de balayage est égal à l'unité.

# FIG.1

| 10 | 12 | 14 | 16 |
|---|---|---|---|
| HDTV SET | FRAME MEMORY | ASPECT RATIO CONVERSION | SCANNER |
| | | | 18 |
| | | | PRINTER |

# FIG.2

FROM FRAME MEMORY 12

TO PRINTER 18

20

Din          Dout

FIFO

WE           RE          → VE

WCLK         RCLK

22

MEMORY CONTROLLER

TO FRAME MEMORY 12

PRINTER

Hsync  Vsync

EP 0 421 773 B1

# FIG. 3

i) PRINTER Hsync

ii) FRAME MEMORY RM

iii) WE

iv) RE

v) VE

# FIG. 4

FROM SCANNER 16

TO PRINTER 18

FRAME MEMORY

24

20

26

FIFO

Din    Dout
WE      RE
WCLK    RCLK

CONVERT
DIRECTION

INDICATE
SIGNAL

MEMORY

CONTROLLER

22

CONVERT DIRECTION
INDICATE SIGNAL

TO FRAME
MEMORY 12

PRINTER

Hsync  Vsync

CONVERT DIRECTION
INDICATE SIGNAL

EP 0 421 773 B1

# FIG.5

131
114
A
113
112
110
LB
111L
152
151
151
151
151
151
153
117
123
115
129
119
116
154
R

TO PRINTER Hsync

MOTOR DRIVE CIRCUIT — 120

IMAGE SIGNAL MODULATION CIRCUIT — 101

D/A — 103

105

Y M C K

RGB→YMCK — 107

108

FROM ASPECT RATIO CONVERTER 14

FROM    SCANNER 18

EP 0 421 773 B1

# FIG.6

# FIG.7

EP 0 421 773 B1

# FIG.8

(1) PRINTER Hsync

(2) FRAME MEMORY READ R M

(3) W E

(4) R E

(5) V E

# FIG.9

(1) PRINTER Hsync

(2) FRAME MEMORY READ R M

(3) W E

(4) R E

(5) V E

# F I G. 10

# F I G. 12

# F I G. 13

# FIG.11

TO PRINTER
Hsync

IMAGE SIGNAL MODULATION

D/A

RGB→YMCK

MOTOR DRIVE

PRINTING
SPEED
CHANGING

EP 0 421 773 B1

# FIG.14